# EUROPÄISCHE PATENTSCHRIFT

(11) **EP 2 430 200 B1**
(45) Veröffentlichungstag und Bekanntmachung des Hinweises auf die Patenterteilung: **07.08.2013**
(21) Anmeldenummer: 10715109.4
(22) Anmeldetag: 08.04.2010
(51) Int. Cl.: C21D 9/00, B23K 26/34, C23C 26/02, F16C 9/04, F16C 33/14

(54) **BESCHICHTUNGSVERFAHREN**
COATING METHOD
PROCÉDÉ DE REVÊTEMENT

(30) Priorität: 13.05.2009 DE 102009021127
(43) Veröffentlichungstag der Anmeldung: 21.03.2012
(73) Patentinhaber: Bayerische Motoren Werke Aktiengesellschaft, 80809 München (DE)
(72) Erfinder: LUCHNER, Clemens, 83236 Übersee (DE); KRONENBERG, Marc, 80992 München (DE)
(86) Internationale Anmeldenummer: PCT/EP2010/002190
(87) Internationale Veröffentlichungsnummer: WO 2010/130323

(56) Entgegenhaltungen:
- WO-A1-96/04485
- DE-A1-102006 023 384
- DE-A1-102006 023 397

## Beschreibung

Die Erfindung bezieht sich auf ein Verfahren zur Oberflächenbeschichtung eines härtbaren, Fe-basierten Sinter-, Sinterschmiede- oder Schmiedebauteils und insbesondere zur Innenflächenbeschichtung des großen Pleuelauges eines Kraftfahrzeugpleuels mit einer Lagerschicht, nach dem Oberbegriff des Patentanspruchs 1.

Um ein Sinter- oder Schmiedepleuel dieser Art an der Innenfläche der großen Pleuelbohrung mit einer Lagerschicht zu versehen, wird nach der DE 43 03 592 A1 ein thermisches Spritzverfahren eingesetzt, bei welchem der Lagerwerkstoff in Form von an- oder aufgeschmolzenen Spritzpartikeln auf die Bohrungsinnenfläche geschleudert wird und an dieser vorrangig durch eine mechanische Verklammerung haften bleibt. Aus Gründen einer innigen formschlüssigen Haftung wird dabei die Bohrungsinnenfläche vor der Beschichtung nur grob bearbeitet, auf eine paßgenaue Nachbearbeitung des Rohbauteils an der Lagerbohrung hingegen verzichtet. Als nachteilig hat sich bei derartigen Sinter- oder Schmiedepleueln erwiesen, dass die Anbindung der so aufgebrachten Lagerschicht unter den rauen Betriebsbedingungen von Kraftfahrzeugmotoren nur eine stark begrenzte Dauerstandfestigkeit besitzt.

Ferner ist es aus der DE 10 2004 018 921 A1 bekannt, die Lagerbohrung eines Sinter-, Sinterschmiede- oder Schmiedepleuels im Wege eines lasergestützten Auftragsschweiß- oder-lötverfahrens in der Weise durch eine Gleitlagerschicht zu vergüten, dass nicht nur das Beschichtungsgut im schmelzflüssigen Zustand aufgebracht, sondern auch die zu beschichtende Bohrungsinnenfläche unter örtlicher Laserstrahlwirkung oberflächennah an- oder aufgeschmolzen wird, um so eine hochgradig dauerstandfeste, stoffschlüssige Bindung zwischen der Lagerschicht und der zuvor aus Gründen einer durchgehenden Benetzung vorbearbeiteten Bohrungsinnenfläche zu erzielen. Bei einem derartigen Beschichtungsverfahren verbleiben jedoch wegen der lokalen An- oder Aufschmelzung des Grundmaterials Restspannungen im fertig beschichteten Bauteil, die zu einer Beeinträchtigung der Lagerschichtanbindung am Grundmaterial führen und sich, wenn überhaupt, nur durch aufwändige Gegenmaßnahmen beseitigen lassen.

Bei dem aus der DE 10 2006 023397 A1 oder der DE 10 2006 023384 A1 bekannten Verfahren schließlich wird auf das eisenhaltige Grundmaterial eines Gleitlagers eine Lagerschicht aufgeschmolzen, welche mit dem Grundmaterial durch eine FeSn₂ enthaltende Zwischenschicht verbunden wird.

Demgegenüber ist es Aufgabe der Erfindung, das Beschichtungsverfahren der eingangs genannten Art so auszubilden, dass eine auch unter hohen Beanspruchungen dauerhaft lastfeste, stoffschlüssige Bindung ohne störende Restspannungen zwischen der Beschichtung und dem Grundmaterial des Sinter- oder Schmiedebauteils auf fertigungstechnisch einfache Weise erzielt wird.

Diese Aufgabe wird erfindungsgemäß durch das im Patentanspruch 1 gekennzeichnete Beschichtungsverfahren gelöst.

Die Erfindung beruht auf der Erkenntnis, dass sich bei den bekannten Verfahren eine martensitische Gefügeumwandlung in den nach der Bearbeitung des Rohbauteils vorhandenen, oberflächennahen Randzonen des Grundmaterials einstellt, wenn diese bis zu einem für eine vorwiegend stoffschlüssige und nicht nur formschlüssige Anbindung des Beschichtungsmaterials ausreichenden Temperaturniveau erwärmt werden, und dass eine solche Martensitumwandlung die Ursache für die störenden Restspannungen im Bindungsbereich des fertigen Bauteils ist. Hierauf aufbauend wird die Bauteiloberfläche während des Beschichtungsvorgangs erfindungsgemäß ohne vorherige Bearbeitung, also noch im Rohzustand des Bauteils, in der dann noch ursprünglichen Randzone bis in den Temperaturbereich einer raschen, lückenlos stoffschlüssigen Diffusionsbindung erwärmt, zugleich aber auch eine Martensithärtung an dieser Stelle des Grundmaterials wegen des dort fertigungsbedingt verminderten Kohlenstoffgehalts weitgehend unterbunden. Das Ergebnis ist ein oberflächenbeschichtetes Bauteil mit einer durchgehend stoffschlüssigen, von störenden Restspannungen freien und demzufoge dauerhaft lastfesten Diffusionsbindung zwischen Beschichtungs- und Grundmaterial.

Im Hinblick auf eine örtlich und mengenmäßig besonders exakte Steuerung des Wärmeeintrags erfolgt die Beschichtung gemäß Anspruch 2 zweckmäßigerweise unter Laserstrahlwirkung, und zwar unter Erwärmung der äußeren Randzone höchstens bis zur Solidustemperatur, um zu vermeiden, dass sich in der Beschichtung tribolisch ungünstige Fe-Phasen ausbilden. In diesem Fall kann zusätzlich, wie nach Anspruch 3 bevorzugt, auch auf eine Vorbehandlung der zu beschichtenden Rohteiloberfläche verzichtet werden, weil mögliche Verunreinigungen, wie Trenn- oder Konservierungsmittel, gleichzeitig mit der Laserstrahleinwirkung verdampft werden.

Als vor allem für Kraftfahrzeugpleuel besonders günstiges Beschichtungsmaterial hat sich, wie nach Anspruch 4 bevorzugt, eine Legierung auf Cu-, Sn- oder Al-Basis erwiesen.

Zur Verbesserung der mechanischen Eigenschaften empfiehlt es sich schließlich nach Anspruch 6, das Bauteil vor der Beschichtung nachzuverdichten.

Die Erfindung wird nunmehr anhand eines bevorzugten Ausführungsbeispiels in Verbindung mit den Zeichnungen näher erläutert. Es zeigen in stark schematisierter Darstellung:
- **Fig. 1**: die Ansicht eines Kraftfahrzeugpleuels mit einer an der Innenfläche des großen Pleuelauges aufgebrachten Lagerschicht; und
- **Fign. 2a, 2b**: die Gefügestruktur des Kraftfahrzeugpleuels nach Fig. 1 im Bereich der Lagerschicht bei herkömmlicher Beschichtung (a) und bei einer Beschichtung nach dem erfindungsgemäßen Verfahren (b).

Das in den Fign. gezeigte Kraftfahrzeugpleuel 1 ist auf herkömmliche Weise als Sinter-, Sinerschmiede- oder Schmiedeteil aus einem härtbaren, Fe-basierten Grundmaterial mit einem C-Gehalt zwischen 0,3 und 0,8% hergestellt, beispielsweise aus einem Sinterwerkstoff mit 3% Cu, 0,5% C, 0,3% MnS, Rest Fe oder einem Stahlwerkstoff (C70S6 BY) mit 0,69 - 0,73% C, 0,15 - 0,25% Si, 0,55 - 0,60% Mn, max. 0,045% P, 0,06 - 0,07 S, 0,1 - 0,15% Cr, 0,04 - 0,08% Ni und Rest Fe.

An der Innenfläche 2 ist das große Pleuelauge 3 mit einer Beschichtung 4 aus einem tribologisch günstigen Lagerwerkstoff versehen, etwa einer CuZn31Si1-, einer CuNi2Si- oder einer SnSbCu-Legierung.

Bei konventionellen thermischen Beschichtungsverfahren, etwa dem Flammspritzen, bei dem das Beschichtungsgut im schmelzflüssigen Zustand auf die Pleuelinnenfläche aufgetragen wird, entsteht eine vorwiegend formschlüssige Verklammerung zwischen der Lagerschicht 4 und dem Grundmaterial des vor der Beschichtung an der Innenfläche 2 im Hinblick auf eine verbesserte formschlüssige Anbindung mechanisch zumindest grob bearbeiteten Pleuelauges 3.

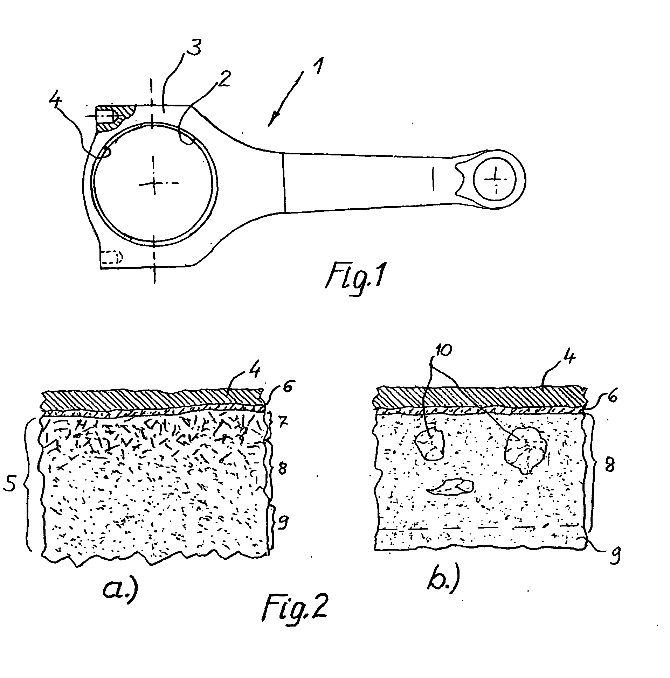

Nach einer weiteren bekannten, anhand der Fig. 2a näher erläuterten Beschichtungsmethode in Form eines lasergestützten Pulver-, Draht- oder Schmelzeverfahrens wird nicht nur das Beschichtungsgut durch einen emergiereichen Laserstrahl aufgeschmolzen, sondern gleichzeitig auch die Pleuelinnenfläche 2 örtlich soweit erhitzt und dadurch die Diffusionsgeschwindigkeit soweit erhöht, dass sich zwischen der Beschichtung 4 und dem Grundmaterial 5 eine ausgeprägte Diffusionszone 6 ausbildet und demzufolge eine qualitativ hochwertige, und zwar vorrangig stoffschlüssige Anbindung erreicht wird. Eine durchgehende Benetzung mit dem schmelzflüssigen Beschichtungsmaterial wird dadurch sichergestellt, dass das Rohbauteil an der Innenfläche 2 des großen Pleuelauges 3 zuvor durch Abtragen der oberflächennahen Randzone von Trenn- und/oder Konservierungsmitteln und sonstigen Verunreinigungen gereinigt wird. In Folge der kurzzeitigen, lokalen Erhitzung und der entsprechend schnellen Abkühlung des an die Diffusionszone 6 angrenzenden Grundmaterials kommt es in diesem Gefügebereich 7 zu einer Martensitumwandlung, die auf dem Weg über ein Zwischenstufengefüge 8 (Bainit) in das ursprüngliche Grundgefüge 9 übergeht. Bei einem derartigen Beschichtungsverfahren verbleiben jedoch Restspannungen im fertig beschichteten Pleuel 1, die zu einer Beeinträchtigung der Diffusionsanbindung der Lagerschicht 4 führen.

Mit dem nachfolgend anhand der Fig. 2b näher beschriebenen Verfahren, welches wiederum ein Laser-Pulver-, Laser-Draht- oder Laser-Schmelzeverfahren ist, werden die störenden Restspannungen auf fertigungstechnisch einfache Weise dadurch wirksam verhindert, dass trotz einer stoffschlüssigen Lagerschichtanbindung eine Martensitumwandlung in der beschichtungsseitigen Randzone des Grundmaterials als Ursache der Restspannungen unterbunden wird. Hierzu wird die Tatsache ausgenutzt, dass der Kohlenstoffgehalt im Rohzustand des Sinter- oder Schmiedeteils 1 in der oberflächennahen Randzone fertigungsbedingt signifikant, nämlich unter 0,2%, abfällt. Diese kohlenstoffarme Randzone wird an dem Rohbauteil belassen und unmittelbar mit dem schmelzflüssigen Beschichtungsgut belegt und dabei unter der lokalen, energiereichen Laserstrahlung kurzzeitig bis über die Austenitisierungstemperatur A_{c1} bis in einen Temperaturbereich mit stark erhöhter Diffusionsgeschwindigkeit erhitzt, wobei die anhaftenden Verunreinigungen durch den auftreffenden Laserstrahl verdampft werden, so dass sich eine durchgehende Benetzung und dann stoffschlüssige Diffusionsbindung der Pleuelinnenfläche 2 mit dem Beschichtungsmaterial ergibt, wegen des geringen Kohlenstoffgehalts jedoch eine Martensitumwandlung in der so beschichteten Randzone des Grundmaterials unterbleibt. Stattdessen bildet sich in diesem Bereich unmittelbar angrenzend an die Diffusionszone 6 ein Zwischenstufengefüge 8 (Bainit). mit eingelagerten Ferritinseln 10 aus, welches nach innen in das ursprüngliche, kohlenstoffreiche Grundgefüge 9 übergeht. Der Wärmeeintrag des Laserstrahls beim Beschichtungsvorgang wird so eingestellt, dass die Solidustemperatur in der Randzone nicht überschritten wird, um tribologisch ungünstige Fe-Phasen in der Beschichtung 4 zu vermeiden. Auf diese Weise wird eine lückenlos stoffschlüssige, von störenden Restspannungen freie und demzufolge dauerhaft lastfeste Diffusionsbindung zwischen dem Beschichtungs- und dem Grundmaterial des Kraftfahrzeugpleuels 1 erreicht.

## Patentansprüche

1. Verfahren zur Oberflächenbeschichtung eines Fe-basierten, härtbaren Sinter-Sinterschmiede- oder Schmiedebauteils, insbesondere zur Innenflächenbeschichtung des großen Pleuelauges eines Kraftfahrzeugpleuels mit einer Lagerschicht, bei dem das auf die Bauteiloberfläche aufgebrachte Beschichtungsgut während des Beschichtungsprozesses in den schmelzflüssigen Zustand versetzt wird, **dadurch gekennzeichnet, dass**
die Bauteiloberfläche während des Beschichtungsprozesses im unbearbeiteten *Rohzustand* des Bauteils in der äußeren, *mit einem fertigungsbedingt signifikant abfallenden Kohlenstoffgehalt unter 0,2%* kohlenstoffärmeren Randzone kurzzeitig über die Austenitisierungstemperatur auf ein Temperaturniveau mit stark erhöhter Diffusionsgeschwindigkeit erwärmt wird.

2. Verfahren nach Anspruch 1, **dadurch gekennzeichnet, dass**
die äußere, kohlenstoffärmere Randzone des Bauteils unter Laserstrahlwirkung höchstens bis zur Solidustemperatur erwärmt wird.

3. Verfahren nach Anspruch 1 oder 2, **dadurch gekennzeichnet, dass**
die Bauteiloberfläche ohne Vorreinigung des Rohbauteils beschichtet wird.

4. Verfahren nach einem der vorhergehenden Ansprüche, **dadurch gekennzeichnet, dass**
die Bauteiloberfläche mit einem Cu-, Sn-oder Al-basierten Beschichtungsgut belegt wird.

5. Verfahren nach einem der vorhergehenden Ansprüche, **dadurch gekennzeichnet, dass**
das Bauteil vor der Beschichtung nachverdichtet wird.

## Claims

1. A method of coating the surface of an Fe-based hardenable sintered forging or forged component, especially for coating the inner surface of the large eye of a motor-vehicle connecting rod with a bearing coating, wherein during the coating process the coating material applied to the component surface is melted, **characterised in that** during the coating process, before the component has been treated or worked, the edge zone of the component surface, where the carbon has been depleted to significantly below 0.2% depending on the manufacturing process, is briefly heated above the austenitising temperature to a temperature level with greatly increased diffusion speed.

2. A method according to claim 1, **characterised in that**
the outer, carbon-depleted edge zone of the component is heated at most up to the solidus temperature by a laser beam.

3. A method according to claim 1 or claim 2, **characterised in that**
the component surface is coated without previously cleaning the untreated component.

4. A method according to any of the preceding claims, **characterised in that**
the component surface is coated with a Cu, Sn, or Al-based coating material.

5. A method according to any of the preceding claims, **characterised in that**
the component is sealed before coating.

## Revendications

1. Procédé de revêtement de surface d'une pièce à base de fer Fe, forgée ou fritée-fritée-forgée, susceptible d'être traitée notamment pour le revêtement de la surface inférieure du grand oeillet d'une bielle de moteur de véhicule comportant une couche formant un coussinet selon lequel le produit de revêtement appliqué à la surface de la pièce est mis dans un état de fusion liquide pendant le procédé de revêtement,
procédé **caractérisé en ce que**
pendant le procédé de revêtement, lorsque la pièce est encore dans son état brut non travaillé, on chauffe la surface de la pièce dans sa zone marginale extérieure pauvre en carbone, abaissée significativement en dessous d'une teneur en carbone de 0,2 % liée à la fabrication, brièvement au-dessus de la température d'austénisation à un niveau de température à vitesse de diffusion fortement augmentée.

2. Procédé selon la revendication 1,
**caractérisé en ce qu'**
on chauffe la zone marginale extérieure la plus pauvre en carbone de la pièce sous l'effet d'un faisceau laser, au plus jusqu'à la température de solidus.

3. Procédé selon la revendication 1 ou 2,
**caractérisé en ce qu'**on
revêt la surface de la pièce sans nettoyer préalablement la pièce brute.

4. Procédé selon l'une des revendications précédentes,
**caractérisé en ce qu'**
on applique à la surface de la pièce un produit de revêtement à base de Cu-, Sn ou Al.

5. Procédé selon l'une des revendications précédentes,
**caractérisé en ce qu'**
on compacte la pièce avant d'appliquer le revêtement.
